# EUROPEAN PATENT SPECIFICATION

(11) **EP 3 082 114 B1**
(45) Date of publication and mention of the grant of the patent: **09.02.2022**
(21) Application number: 16165544.4
(22) Date of filing: 15.04.2016
(51) Int. Cl.: G07F 11/28, G07F 11/42, B65G 47/88

(54) **DEVICE FOR HOLDING AND EXPELLING PACKAGES, PARTICULARLY OF MEDICINES OR THE LIKE, FROM AN INCLINED CHUTE OF A STORAGE CABINET**
VORRICHTUNG ZUM HALTEN UND AUSSTOSSEN VON VERPACKUNGEN, INSBESONDERE VON MEDIKAMENTEN ODER DERGLEICHEN AUS EINER GENEIGTEN RUTSCHE EINES LAGERSCHRANKS
DISPOSITIF POUR MAINTENIR ET EXPULSER DES EMBALLAGES, EN PARTICULIER DE MÉDICAMENTS OU ANALOGUES, À PARTIR D'UNE GOULOTTE INCLINÉE D'UNE ARMOIRE DE RANGEMENT

(30) Priority: 17.04.2015 IT PD20150083
(43) Date of publication of application: 19.10.2016
(73) Proprietor: Label Elettronica S.R.L., 35010 Limena (PD) (IT)
(72) Inventor: RAMI, Enrico, 35133 Padova (IT); RAMI, Margherita, 35013 Cittadella PD (IT)
(74) Representative: Modiano, Micaela Nadia

(56) References cited:
- EP-A1- 2 385 000
- EP-A1- 2 404 589
- EP-A2- 2 206 662

## Description

The present invention relates to a device for holding and expelling packages, particularly of medicines or the like, from an inclined chute of a storage cabinet.

Nowadays in the sale of medicines, automated storage systems are usually used which comprise cabinets fitted with inclined chutes and stocked with rows of consecutive packages of medicines, to facilitate the expulsion thereof.

Below, on the side where the lower ends of the inclined chutes are facing, there are conveyor belts that are adapted to receive the packages that are dispensed by the chutes.

The inclined chutes are provided, at the lower end, with a retention element that holds the leading package in the row, in order to prevent the spontaneous dispensing thereof from the chute, and very often they are also provided with expulsion devices for dispensing the packages on command.

In a stock magazine that is automated in this manner, the expulsion devices can be actuated in order to command the expulsion from selected chutes of a previously-chosen number of packages.

These packages fall on the conveyor belts which transport them to a collection point where they are made available to the operator who requested them.

Many expulsion devices known today are provided with an expulsion element connected to a mechanism moved by an actuator, for example an electromagnetic actuator. The mechanism is adapted to cause the rotation of the expulsion element, after which it is usually facing an open window on the bottom of the chute, proximate to the lower end of the latter, while lifting the leading package. Examples of such known expulsion devices are for instance described in EP2385000 A1, EP2404589 A1 and in EP2206662 A2.

These devices are not devoid of drawbacks.

First of all, if the package is particularly light it often happens that, even after the rotation of the expulsion element, it cannot get past the retention element, because the expulsion element, with its rotation, in addition to lifting it also pushes it backward. Then gravity makes the package come back into abutment on the retention element.

Furthermore, it is often necessary to carry out a preliminary trial of the device as a function of the packages to be expelled by the chute. Substantially the elements that make up the device must be dimensioned on a case by case basis, as a function of the weight and space occupation of the package. For example, for large-sized packages it may be necessary to provide a retention element that is higher than necessary for smaller-sized items, or it may be necessary to adjust the excitation time of the electromagnet, in an electromagnetic actuator, as a function of the characteristics and type of the package (i.e. as a function of the weight, the dimensions or even the shape, because unusual shapes can have their center of gravity in a position that makes handling the product difficult). Often, in fact, it is necessary to have several different excitation times of the magnet in order to enable the package to get past the retention element and at the same time prevent the expulsion element from remaining raised for too long, with the risk that it becomes stuck in such position and the descent of the next package prevents it from returning to the inactive position.

Another drawback of the devices known today consists in that the retention element and the expulsion element constitute two separate elements and this inevitably entails higher overall production costs of the expulsion device, necessitating the provision of more individual components and an apparatus that comprises more molds.

Another drawback consists in that very often the bottom of the inclined chute is provided with slots in which the paper flaps of the packages can get caught, for example upstream of the retention element, thus preventing the expulsion thereof from the chute.

The aim of the present invention is to provide a device for holding and expelling packages from the inclined chutes of cabinets in stock magazines, in particular of pharmaceutical products, which is capable of overcoming the above drawbacks while ensuring the correct expulsion of any package, independently of its weight, its dimensions or its shape.

Within this aim, an object of the invention is to provide an expulsion device at low cost compared to the devices known today.

Another object of the invention is to provide an expulsion device that can be used flexibly in cabinets, avoiding the need for preliminary trials as a function of the characteristics of the package.

This aim and these and other objects which will become better apparent hereinafter are achieved by a device for holding and expelling packages, particularly of medicines or the like, from an inclined chute of a storage cabinet, as claimed by independent claim 1.

Further characteristics and advantages of the invention will become better apparent from the description of a preferred, but not exclusive, embodiment of a device according to the invention, which is illustrated by way of non-limiting example in the accompanying drawings wherein:
- Figure 1 shows a device according to the invention during the holding of a leading package and applied to an inclined chute;
- Figure 2 shows the device according to the invention during the expulsion of a leading package and applied to an inclined chute;

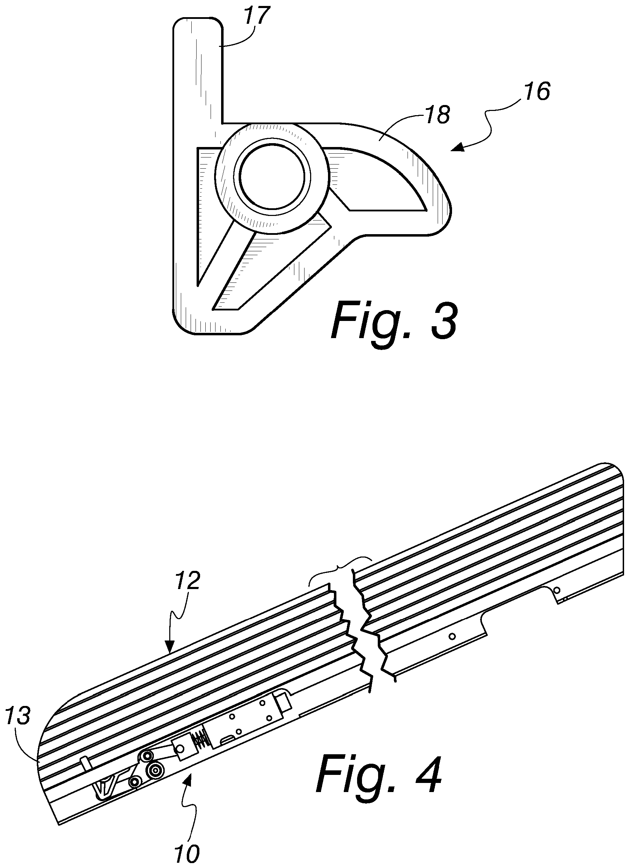

- Figure 3 is an enlargement of the holding and expelling element;
- Figure 4 shows an inclined chute with the device according to the invention applied thereto.

With reference to the figures, the device according to the invention is generally designated with the reference numeral 10.

The device is designed in particular for the expulsion of packages 11, in particular of medicines or the like, from an inclined chute 12 of a storage cabinet, preferably at the dispensing end 13.

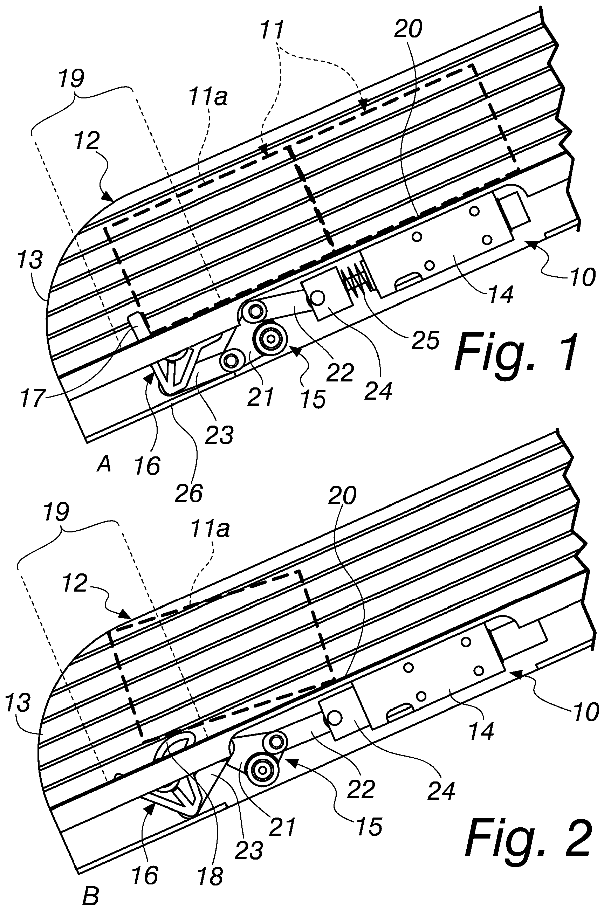

The inclined chute 12 is adapted to contain a row of packages 11, as illustrated in Figure 1.

The device 10 comprises an actuator 14, a mechanism 15 driven by the actuator 14 and an element 16 for holding and expelling the packages 11, which is installed at the dispensing end 13 of the inclined chute 12 and can be actuated by way of the mechanism 15.

The holding and expelling element 16 is pivoted on the inclined chute 12 and advantageously is provided with an abutment protrusion 17 for a leading package 11a and a lifting arm 18, for lifting such leading package 11a, which is integral with the abutment protrusion 17.

The holding and expelling element 16 is adapted to pass from a position A for holding the leading package 11a, with the abutment protrusion 17 protruding from a window 19 open on the bottom 20 of the inclined chute 12 and the lifting arm 18 substantially below the window 19, to a position B for expelling the leading package 11a, which is rotated with respect to the preceding position and for which the abutment protrusion 17 is substantially below the window 19 and the lifting arm 18 is protruding from the bottom 20 through the window 19, lifting the leading package 11a.

The holding and expelling element 16 is made in a single piece and is pivoted on the inclined chute 12 and coupled to the mechanism 15, by which it is made to rotate about its own rotation axis, perpendicular to the direction of longitudinal extension of the inclined chute 12.

In particular, the mechanism 15 comprises a rocker 21 pivoted on the inclined chute 12 and two linkages 22 and 23 coupled on a respective arm of the rocker 21, i.e. a first linkage 22 for interconnecting the moveable part 24 of the actuator 14 to the rocker 21 and a second linkage 23 for interconnecting the rocker 21 to the holding and expelling element 16. The second linkage 23 is coupled to the holding and expelling element 16 at a certain distance from the pivoting point of the latter on the inclined chute 12.

The actuator 14 is preferably of the electromagnetic type and is provided with a helical spring 25 for pushing the moveable part 24, in order to return the holding and expelling element 16 to the holding position A.

The device 10 is also conveniently provided with a resting element 26 for the arm of the second linkage 23. The resting element 26, which is integral with the inclined chute 12 and is provided in a single piece therewith, is adapted to limit the rotation of the second linkage 23 when the holding and expelling element 16 passes from the expelling position B to the holding position A of the leading package 11a.

Operation of the device according to the invention is the following.

The packages 11 are ordered and in a row on the inclined chute 12 and are held by the abutment protrusion 17 at the dispensing end 13, as illustrated in Figure 1.

On the command of an operator, the device 10 is actuated and dispenses the leading package 11a from the inclined chute 12, as illustrated in Figure 2.

In this step the command is sent to the actuator 14, which by retrieving the moveable part 24 causes the movement of the first linkage 22 which is coupled thereto.

In turn the first linkage 22, by retreating toward the actuator 14, rotates the rocker 21, which in turn entrains the second linkage 23, thus causing the upward movement of the end of the latter, with which it is coupled. Since the holding and expelling element 16 is pivoted to the inclined chute 12 and coupled to the second linkage 23, the movement of the latter causes its rotation and therefore its transition from the holding position A to the expelling position B for expelling the leading package 11a.

During the rotation the abutment protrusion 17, which initially protrudes from the window 19, is gradually hidden below that window 19 and therefore below the bottom 20, while the lifting arm 18, which is initially below the bottom 20, gradually juts therefrom through the window 19, so lifting the leading package 11a.

Substantially, while the leading package 11a is being lifted, the abutment protrusion 17 is lowered below the bottom 20 and therefore it cannot impede the passage of that package through the dispensing end 13.

After the actuation of the actuator 14, the helical spring 25 pushes the movable portion 24 outwardly and the holding and expelling element 16 is returned to the holding position A. In the meantime a subsequent one of the packages 11 descends by way of the inclination, and hence by gravity, along the inclined chute and stops at the abutment protrusion 17, so becoming a leading package 11a ready to be dispensed.

In this situation, the accidental rotation of the holding and expelling element 16, owing to the weight force exerted by the packages 11 on the abutment protrusion 17, is prevented by the resting element 26 for the second linkage 23. In fact the movement of the latter can exclusively be as a result of the rotation of the rocker 21, and therefore it must be commanded, because the resting element 26 prevents its movement downward, thus also restraining the holding and expelling element 16.

The device 10 is therefore capable of ensuring the holding and expulsion of any type of package, independently of its weight and shape, thus eliminating any and every possible impediment to the dispensing of the package from the inclined chute and preventing accidental rotations of the abutment protrusion 17.

Furthermore the production costs are lower than the solutions known nowadays, because the device according to the invention does not require preliminary trials for adaptation as a function of the packages to be expelled from the cabinet, it is not necessary to have holding portions with different heights as a function of the packages to be handled, and the holding and expulsion of the package are ensured by way of a single element, thus reducing the production costs caused by the provision of molds.

It should also be noted that the leading package 11a is not positioned on slots in which the paper flaps of the packages can get caught, because in this case there are no spaces between the holding element and the expulsion element, which instead form a single body.

In practice it has been found that the invention fully achieves the intended aim and objects, by providing a device for holding and expelling packages, in particular of medicines or the like, from inclined chutes of storage cabinets, which is capable of ensuring the correct expulsion of any type of package, independently of weight, dimensions or shape, therefore without requiring preliminary trials, and at low cost with respect to the devices known today.

Furthermore, thanks to the certainty of expelling the package from the inclined chute, it is not necessary to manage different excitation times of the magnet of the actuator.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (10) for holding and expelling packages (11), particularly of medicines or the like, from an inclined chute (12) of a storage cabinet, said inclined chute (12) being adapted to contain a row of said packages (11), said device (10) comprising, supported by said inclined chute (12):
- at least one actuator (14) having a movable part (24) ,
- at least one mechanism (15) actuated by said actuator (14),
- at least one element (16) for holding and expelling said packages (11), which can be operated by way of said mechanism (15) and is installed at the dispensing end (13) of said inclined chute (12) on which it is pivoted,
wherein said holding and expelling element (16) has an abutment protrusion (17) for a leading package (11a) and an arm (18), for lifting said leading package (11a), which is integral with said abutment protrusion (17), said holding and expelling element (16), with said abutment protrusion (17) and said lifting arm (18), being provided in a single piece,
- a rocker (21) pivoted on said inclined chute (12),
- two linkages (22, 23) each pivoted on a respective arm of said rocker (21), a first linkage (22) for interconnecting the moveable part (24) of said actuator (14) to said rocker (21) and a second linkage (23) for interconnecting said rocker (21) to said holding and expelling element (16),
and integral with said inclined chute (12),
- a resting element (26) for the arm of said second linkage (23), which is adapted to limit the rotation thereof when said holding and expelling element (16) passes from an expelling position (B) to a holding position (A).

2. The device according to claim 1, **characterized in that** said holding and expelling element (16) is adapted to pass from the position (A) for holding said leading package (11a), with said abutment protrusion (17) protruding from a window (19) open on the bottom (20) of said inclined chute (12) and said lifting arm (18) substantially below said window (19), to the position (B) for expelling said leading package (11a), which is rotated with respect to the preceding position and for which said abutment protrusion (17) is substantially below said window (19) and said lifting arm (18) is protruding from said bottom (20) through said window (19), lifting said leading package (11a).

3. The device according to claim 1, **characterized in that** said actuator (14) is of the electromagnetic type.

## Patentansprüche

1. Eine Vorrichtung (10) zum Halten und Ausstoßen von Verpackungen (11), insbesondere für Medikamente oder dergleichen, aus einer geneigten Rutsche (12) eines Lagerschranks, wobei die geneigte Rutsche (12) ausgebildet ist, um eine Reihe der Verpackungen (11) aufzunehmen; wobei die Vorrichtung (10) Folgendes, getragen von der geneigten Rutsche (12), umfasst:
- mindestens ein Antriebselement (14), das einen beweglichen Teil (24) hat,
- mindestens einen von dem Antriebselement (14) angetriebenen Mechanismus (15),
- mindestens ein Element (16) zum Halten und Ausstoßen der Verpackungen (11), welches durch den Mechanismus (15) betätigt werden kann und am Abgabeende (13) der geneigten Rutsche (12) installiert ist, an welchem es drehgelenkig angebracht ist;
wobei das Halte- und Ausstoßelement (16) einen Widerlagervorsprung (17) für eine führende Verpackung (11a) und einen Arm (18) zum Anheben der führenden Verpackung (11a) hat, der integral mit dem Widerlagervorsprung (17) ist, wobei das Halte- und Ausstoßelement (16) mit dem Widerlagervorsprung (17) und dem Hebearm (18) einteilig ausgebildet ist;
- einen einarmigen Kniehebel (21), der drehgelenkig an der geneigten Rutsche (12) angebracht ist,
- zwei Verbindungselemente (22, 23), die jeweils drehgelenkig an einem entsprechenden Arm des Kniehebels (21) angebracht sind, ein erstes Verbindungselement (22) zur Verbindung des beweglichen Teils (24) des Antriebselements (14) mit dem Kniehebel (21) und ein zweites Verbindungselement (23) zur Verbindung des Kniehebels (21) mit dem Halte- und Ausstoßelement (16),
und integral mit der geneigten Rutsche (12),
- ein Auflageelement (26) für den Arm des zweiten Verbindungselements (23), welches ausgebildet ist, um die Rotation desselben zu begrenzen, wenn das Halte- und Ausstoßelement (16) aus einer Ausstoßposition (B) in eine Halteposition (A) übergeht.

2. Die Vorrichtung gemäß Anspruch 1, **dadurch gekennzeichnet, dass** das Halte- und Ausstoßelement (16) ausgebildet ist, um aus der Position (A) zum Halten der führenden Verpackung (11a), in welcher der Widerlagervorsprung (17) aus einem Fenster (19) herausragt, das am Boden (20) der geneigten Rutsche (12) offen ist, und der Hebearm (18) sich im Wesentlichen unterhalb des Fensters (19) befindet, in die Position (B) zum Ausstoßen der führenden Verpackung (11a) zu wechseln, die im Verhältnis zur vorherigen Position gedreht ist und für die der Widerlagervorsprung (17) sich im Wesentlichen unterhalb des Fensters (19) befindet und der Hebearm (18) durch das Fenster (19) von dem Boden (20) vorsteht und so die führende Verpackung (11a) anhebt.

3. Die Vorrichtung gemäß Anspruch 1, **dadurch gekennzeichnet, dass** das Antriebselement (14) vom elektromagnetischen Typ ist.

## Revendications

1. Dispositif (10) destiné à retenir et à expulser des emballages (11), en particulier de médicaments ou analogues, à partir d'une goulotte inclinée (12) d'une armoire de rangement, ladite goulotte inclinée (12) étant adaptée pour contenir une rangée desdits emballages (11), ledit dispositif (10) comprenant, supportés par ladite goulotte inclinée (12) :
- au moins un actionneur (14) ayant une partie mobile (24),
- au moins un mécanisme (15) actionné par ledit actionneur (14),
- au moins un élément (16) pour retenir et expulser lesdits emballages (11), qui peut être actionné au moyen dudit mécanisme (15) et est installé à l'extrémité de distribution (13) de ladite goulotte inclinée (12) sur laquelle il est monté à pivotement,
dans lequel ledit élément de retenue et d'expulsion (16) comporte une protubérance de butée (17) pour un emballage de tête (11a) et un bras (18), pour lever ledit emballage de tête (11a), qui est formé d'un seul tenant avec ladite protubérance de butée (17), ledit élément de retenue et d'expulsion (16), avec ladite protubérance de butée (17) et ledit bras de levage (18), étant fourni en une seule pièce,
- un basculeur (21) monté à pivotement sur ladite goulotte inclinée (12),
- deux éléments de liaison (22, 23) montés à pivotement chacun sur un bras respectif dudit basculeur (21), un premier élément de liaison (22) pour relier la partie mobile (24) dudit actionneur (14) audit basculeur (21) et un deuxième élément de liaison (23) pour relier ledit basculeur (21) audit élément de retenue et d'expulsion (16),
et d'un seul tenant avec ladite goulotte inclinée (12),
- un élément d'appui (26) pour le bras dudit deuxième élément de liaison (23), qui est adapté pour limiter la rotation de ce dernier lorsque ledit élément de retenue et d'expulsion (16) passe d'une position d'expulsion (B) à une position de retenue (A).

2. Dispositif selon la revendication 1, **caractérisé en ce que** ledit élément de retenue et d'expulsion (16) est adapté pour passer de la position (A) pour retenir ledit emballage de tête (11a), où ladite protubérance de butée (17) fait saillie depuis une fenêtre (19) ouverte dans la partie inférieure (20) de ladite goulotte inclinée (12) et où ledit bras de levage (18) se trouve substantiellement sous ladite fenêtre (19), à la position (B) pour expulser ledit emballage de tête (11a), qui a subi une rotation par rapport à la position précédente et pour laquelle ladite protubérance de butée (17) se trouve substantiellement sous ladite fenêtre (19) et ledit bras de levage (18) fait saillie depuis ladite partie inférieure (20) à travers ladite fenêtre (19), en levant ledit emballage de tête (11a).

3. Dispositif selon la revendication 1, **caractérisé en ce que** ledit actionneur (14) est de type électromagnétique.
